# EUROPÄISCHE PATENTSCHRIFT

(11) **EP 1 515 862 B1**
(45) Veröffentlichungstag und Bekanntmachung des Hinweises auf die Patenterteilung: **23.05.2007**
(21) Anmeldenummer: 03760573.0
(22) Anmeldetag: 25.06.2003
(51) Int. Cl.: B60G 21/055

(54) **PENDELSTÜTZE AUS EINEM STRANGPRESSPROFIL**
PENDULUM SUPPORT CONSISTING OF AN EXTRUDED PROFILE
SUPPORT OSCILLANT CONSTITUE D'UN PROFILE EXTRUDE

(30) Priorität: 25.06.2002 DE 10228370
(43) Veröffentlichungstag der Anmeldung: 23.03.2005
(73) Patentinhaber: ZF Lemförder Metallwaren AG, 49448 Lemförde (DE)
(72) Erfinder: BUDDE, Frank, 49401 Damme (DE); WOLF, Georg, 49080 Osnabrück (DE)
(86) Internationale Anmeldenummer: PCT/DE2003/002110
(87) Internationale Veröffentlichungsnummer: WO 2004/000585

(56) Entgegenhaltungen:
- EP-A- 0 149 979
- EP-A- 0 636 504
- EP-A- 1 217 233
- US-A- 6 007 079
- US-B1- 6 398 446

## Beschreibung

Die vorliegende Erfindung betrifft eine Pendelstütze gemäß den Merkmalen des Oberbegriffs des Anspruchs 1.

Pendelstützen dienen im Kraftfahrzeugbereich der Verbindung von Stabilisator und Drehlager bzw. der Achse eines Kraftfahrzeugs. Pendelstützen zeichnen sich i.d.R. durch hohe dynamische Belastbarkeit bei gleichzeitiger Korrosionsfestigkeit aus.

Pendelstützen aus dem PKW-Bereich werden heutzutage aus Metall oder Kunststoff gefertigt. Die metallischen Bauteile sind im Gegensatz zu Kunststoffpendelstützen relativ schwer. Sie haben jedoch den Vorteil, dass ihre Länge durch einfache Verbindungsverfahren, wie z.B. Reibschweißen, variiert werden können. Pendelstützen aus Kunststoff haben dagegen zwar vorteilhaft ein geringes Gewicht, es muss für jede benötigte Länge jedoch ein eigenes Spritzgusswerkzeug erstellt werden, was relativ hohe Kosten verursacht. Die spritzgegossenen Pendelstützen weisen zudem nachteilig Bindenähte auf, so dass das Bauteil größer dimensioniert werden muss, um diese Schwachstelle auszugleichen.

Pendelstützen gibt es in unterschiedlichen Ausführungsformen. Um die Beweglichkeit der Bauteile zueinander zu garantieren, weisen die Pendelstützen z.B. ein- oder beidseitig Kugelbolzen bzw. Kugelgelenke auf. Für eine gute Funktionsweise dieser Gelenke müssen die Einzelkomponenten wie Kugelschale und Kugelzapfen sehr genau gearbeitet sein. Zudem ist ein Dichtungssystem in Form z.B. eines Dichtungsbalgs notwendig, um die im Allgemeinen geschmierten Kugelgelenke vor Schmutz und Korrosion zu schützen.

Die EP 0 636 504 A1 offenbart eine Pendelstütze für ein Kraftfahrzeug mit einem länglichen, als hohles Strangpressprofilteil ausgebildeten Grundkörper, der über mindestens ein Befestigungselement mit Kfz-Bauteilen verbindbar ist. Die Montage dieser Pendelstütze ist jedoch sehr aufwendig, da sämtliche Bauteile und Befestigungselemente, auch die zu verbindenden Kfz-Bauteile, von einer zusätzlichen Schraube durchgriffen werden und mittels endseitig aufgeschraubter Mutter zusammengehalten bzw. miteinander in Kontakt gebracht werden.

Aufgabe der vorliegenden Erfindung ist es, eine Pendelstütze bereitzustellen, die einfach in ihrem Aufbau ist, und sich leicht montieren lässt.

Diese Aufgabe wird erfindungsgemäß durch eine Pendelstütze mit den Merkmalen des Anspruchs 1 gelöst. Vorteilhafte Weiterbildungen der Pendelstütze ergeben sich durch die Merkmale der Unteransprüche.

Vorteilhaft ist die erfindungsgemäße Pendelstütze einfach in ihrem Aufbau und damit kostengünstig herstellbar. Die Länge der Pendelstütze kann leicht variiert werden, da das Strangpressprofil bzw. Extrusionsprofil leicht mittels geeigneter Werkzeuge, wie z.B. einer Säge, durch Absägen des Grundkörpers verkürzbar ist. Bedingt durch das vorteilhafte Herstellungsverfahren des Grundkörpers weist dieser keine Bindenähte auf, wie sie u.a. durch das Spritzgussverfahren z.B. aufgrund des Umfließens von Kernen entstehen. Hierdurch wird bei vergleichbaren Abmessungen eine höhere Stabilität erreicht, so dass die Pendelstütze bei gleichen Eigenschaften insgesamt leichter gebaut werden kann. Um eine besonders hohe Festigkeit zu erzielen ist der Grundkörper vorzugsweise aus einem verstärkten Kunststoff herzustellen. Eine derartig hergestellte Pendelstütze kann vorteilhaft hohe Zug- und Druckkräfte übertragen, wobei gleichzeitig die Knickkraftanforderungen ebenfalls erfüllt werden. Bedingt durch das vorteilhaft gewählte Extrusionsverfahren können mit einer Maschine unterschiedlich lange Grundkörper gefertigt werden, wodurch die Fertigungskosten gering bleiben. Beim Extrusionsverfahren werden die Verstärkungsfasern in Belastungsrichtung ausgerichtet.

Der Grundkörper weist erfindungsgemäß zueinander in Längserstreckung des Grundkörpers parallele Nuten auf, die mit Vorsprüngen eines Befestigungselementes als Rast- oder Schnappverbindungen zusammenwirken. Die Nuten bzw. Rücksprünge können außen und/oder innen am Grundkörper angeordnet sein. Durch diese Konstruktion ist die Pendelstütze relativ leicht zu montieren, da die Befestigungselemente leicht und ohne Werkzeuge in oder auf die Stirnseiten des Grundkörpers einbringbar bzw. aufschiebbar sind, wonach sie bedingt durch die Schnapp- bzw. Rastverbindung oder Schraubverbindung sicher gegen ungewolltes Verlieren gesichert sind. Die Befestigungselemente sind vorteilhaft derart ausgebildet, dass sie leicht an einem Bauteil der Karosserie oder an dieser direkt befestigbar sind. Im einfachsten Fall durchgreift das Befestigungselement oder ein dem Befestigungselement zugeordneter Bolzen oder Schraube eine geeignete Öffnung des Bauteils bzw. der Karosserie. Sofern das Befestigungselement die Beweglichkeit zwischen Grundkörper und Bauteil bzw. Karosserie selbst ermöglichen soll, ist das Befestigungselement vorteilhaft aus einem weicheren Material, wodurch es sich im geforderten Rahmen verbiegen kann.

Sofern das Befestigungselement aus einem festeren Material gefertigt ist, bilden zusätzliche elastische Elemente zusammen mit den anderen Bauteilen ein Gelenk zwischen Pendelstütze und dem daran befestigten Kfz-Bauteil, so dass gewisse Dreh- und Kippbewegungen zwischen den Bauteilen möglich sind. Hierbei ist es vorteilhaft, wenn das Bauteil keinen direkten Kontakt mit dem Befestigungselement, sondern nur mit den elastischen Elementen hat. Die elastischen Elemente sind vorteilhaft aus Gummi oder TPE (Thermoplastischen Elastomeren, auch geschäumt). Das Befestigungselement ist vorteilhaft aus einem thermoplastischen Material und ist je nach Anforderung unverstärkt oder verstärkt, so dass es in jedem Falle einfach und kostengünstig im Spritzgussverfahren hergestellt werden kann.

Durch eine Ausformung der umlaufenden Nuten des Grundkörpers als im Querschnitt rechteckige Nuten sowie der Ausformung der insbesondere umlaufenden Vorsprünge des Befestigungselements als im Querschnitt sägezahnförmige Zähne, wird eine Rastverbindung geschaffen die eine unlösbare Verbindung zwischen Grundkörper und Befestigungselement bildet. Die umlaufenden Rücksprünge bzw. Nuten des Grundkörpers können selbstverständlich ebenfalls einen sägezahnförmigen Querschnitt aufweisen, wobei die steilen Flanken der Vorsprünge und Nuten ein ungewolltes Lösen des montierten Befestigungselements sicher verhindern.

Die Befestigungselemente können zudem als Stopfen dienen, die die jeweils eine Stirnseite des als Hohlprofil ausgebildeten Grundkörpers verschließen. Zur besseren Abdichtung können zusätzliche Dichtungselemente verwendet werden. Es ist ebenso möglich, den Grundkörper mit dem Befestigungselement zu verkleben oder zu verschweißen. Hierdurch wird eine noch bessere Sicherung gegen ungewolltes Lösen der Verbindung Grundköper-Befestigungselement erzielt. Ferner werden keine zusätzlichen Dichtungselemente mehr benötigt.

Sofern die umlaufenden Rücksprünge bzw. Nuten außen angeordnet sind, ist es auch möglich, zwei den Grundkörper umfassende Befestigungselemente vorzusehen, die auf den Grundkörper von zwei Seiten her aufgeschoben werden. Die Befestigungselemente haben hierbei vorzugsweise an ihren der Mantelfläche des Grundkörpers zugewandten Innenflächen umlaufende Vorsprünge, insbesondere in Form von Sägezähnen, die mit den Rücksprüngen des Grundkörpers zusammenwirken. Zwischen den Befestigungselementen ist das an der Pendelstütze zu befestigende Bauteil angeordnet, wobei dieses z.B. den Grundkörper ebenfalls umfassen kann. Die Befestigungselemente halten das Bauteil zwischen sich in Position, wobei zur besseren Beweglichkeit noch elastische Elemente zwischen den Befestigungselementen und dem Bauteil angeordnet sein können, sofern nicht die Befestigungselemente aus einem hinreichend weichen Material zumindest an ihren am Bauteil angrenzenden ersten Bereichen gefertigt sind. Vorzugsweise sind die Befestigungselemente und/oder die elastischen Elemente so auszubilden, dass das Bauteil nicht mit dem Grundkörper in Berührung kommt. An den aneinander zugewandten Enden des ersten Bereichs jedes Befestigungselements kann vorteilhaft jeweils ein nach außen gerichteter Kragen angeformt sein, der jeweils an dem mindestens einem elastischen Element anliegt und dieses druckbeaufschlagt. Hierdurch ergibt sich ein besserer Kontakt zwischen Bauteil und Pendelstütze.

Es versteht sich von selbst, dass das Kfz-Bauteil jedes beliebige geformte Teil sein kann, welches lose oder fest mit der Karosserie eines Fahrzeugs verbunden ist. So ist es auch möglich, dass das Kfz-Bauteil eine Schraube mit einem ringförmigen Kopf ist, wobei der Ring die fensterartige Öffnung bildet, die vom Befestigungsmittel bzw. einem Bolzen oder Sicherungsstift des Befestigungselements durchgriffen wird, bzw. welcher den Grundkörper umfasst. Die Anzahl der ineinander greifenden Verrastungen zwischen Grundkörper und Befestigungselement ist jeweils den gegebenen Anforderungen anzupassen. So ist auch die Tiefe und/oder Form der Rücksprünge bzw. Nuten sowie die Höhe und/oder Form der Vorsprünge der Befestigungselemente den jeweiligen Anforderungen anzupassen. Um das Befestigungselement besser in den Grundkörper einschieben bzw. auf diesen aufschieben zu können kann zudem der die Vorsprünge aufweisende Bereich geschlitzt ausgeführt sein. Ebenfalls ist es möglich die Rücksprünge bzw. Nuten am Befestigungselement und die Vorsprünge am Grundkörper vorzusehen, wodurch sich eine bloße Funktionsumkehr ergibt.

Die dargestellten möglichen Ausführungsformen der erfindungsgemäßen Pendelstütze sind vorteilhaft durch wenige kostengünstig und einfach herstellbare Bauteile zusammengesetzt, so dass sich eine preiswerte Pendelstütze ergibt.

Nachfolgend werden einige mögliche Ausführungsformen der erfindungsgemäßen Pendelstütze anhand von Zeichnungen näher erläutert.

Es zeigen:
- Fig. 1:: eine Querschnittsdarstellung durch eine erste Ausführungsform eines erfindungsgemäßen Grundkörpers mit einem an einer Seite montiertem Befestigungselement;
- Fig. 1a:: Befestigungselement gemäß Fig. 1;
- Fig. 1b:: elastisches Element gemäß Fig. 1,
- Fig. 2:: eine Seitenansicht eines alternativen Befestigungselements;
- Fig. 3:: eine zweite Ausführungsform eines erfindungsgemäßen Grundkörpers;
- Fig. 4:: ein erfindungsgemäßer Grundkörper mit an einer Stirnseite montiertem Befestigungselement;
- Fig. 5:: eine weitere alternative Ausgestaltung einer erfindungsgemäßen Pendelstütze;
- Fig. 5a, 5b:: seitliche Darstellung und Draufsicht auf ein Befestigungselement gemäß Fig. 5;
- Fig. 6:: dritte mögliche Ausführungsform einer Pendelstütze;
- Fig. 7:: vierte mögliche Ausgestaltung der Befestigung eines Befestigungselements an einem Grundkörper;
- Fig. 8:: Querschnittsdarstellung durch eine weitere alternative Ausgestaltung einer erfindungsgemäßen Pendelstütze;
- Fig. 9:: Schraube zur Verbindung der Pendelstütze mit einem Kfz-Bauteil;
- Fig. 10:: alternative Ausführungsform eines Grundkörpers mit einer Schraube mit selbstschneidendem Gewinde als Befestigungselement;
- Fig. 11:: Längsschnittdarstellung eines weiteren mittels des Hohlkörperblasverfahrens hergestellten Grundkörpers;
- Fig. 12, 13:: Querschnittsdarstellungen durch End- und Mittelbereich des Grundkörpers gem. Fig. 11.

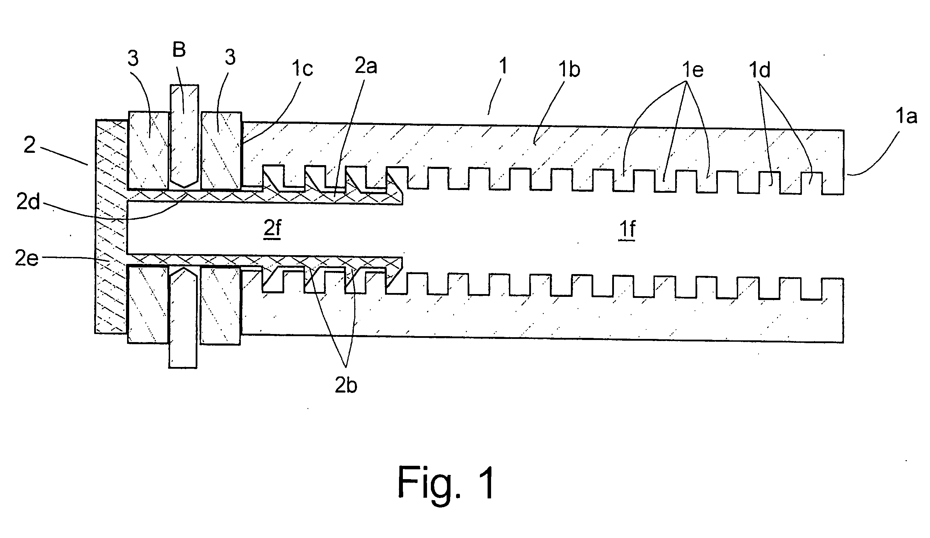

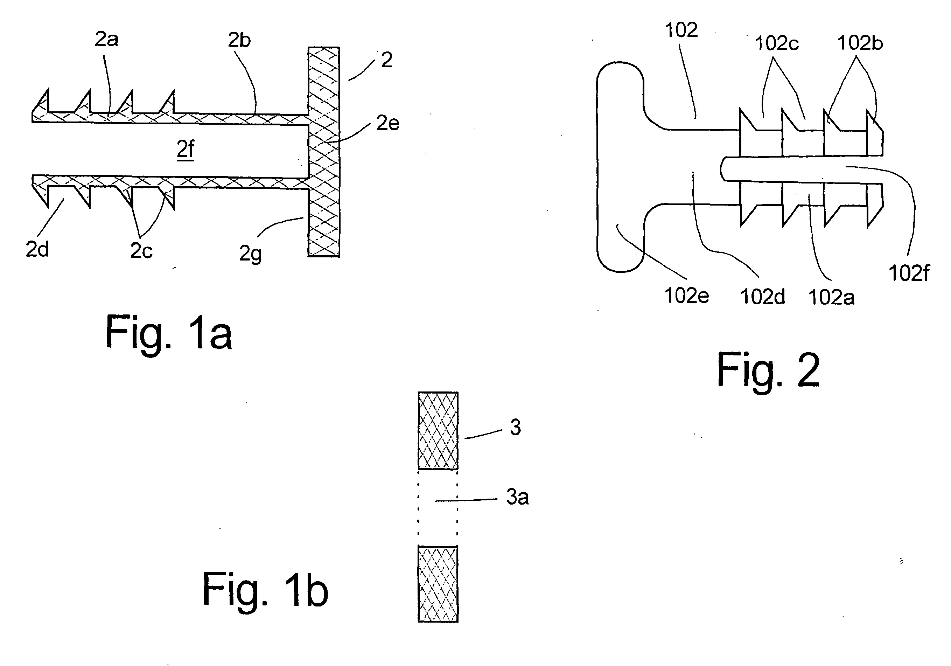

Die Fig. 1 zeigt eine erste mögliche Ausgestaltung eines Grundkörpers 1, der als hohles Strangpressprofil ausgebildet ist. Der Grundkörper 1 weist einen mittleren Bereich 1b sowie Stirnseiten 1a und 1c auf, in denen der Hohlraum 1f endet. Der Grundkörper 1 weist an seiner dem Hohlraum 1f bildenden Innenwandung Vorsprünge 1e bzw. Rücksprünge 1d auf, die zusammen umlaufende, vom Querschnitt her rechteckige, Nuten bilden. Diese Rücksprünge bzw. Nuten 1d bilden zusammen mit den umlaufenden im Querschnitt keilförmigen bzw. sägezahnförmigen Vorsprüngen 2b eines Befestigungselements 2 Verrastungen, so dass das Befestigungselement 2 nach Einschieben in eine Stirnseite 1a bzw. 1c des Grundkörpers ohne Zerstörung des Befestigungselements bzw. des Grundkörpers nicht mehr herausgezogen werden kann. Das Befestigungselement 2 hat die Form einer Schraube, wobei der Schraubenkopf 2e als Begrenzungselement mit Kragen ausgebildet ist. An den Kopfbereich 2e ist ein Zwischenbereich 2d angeformt, welcher übergeht in einen ersten Bereich 2a, der die außen umlaufenden Vorsprünge bzw. Zähne 2b aufweist. Zum Befestigen eines Kfz-Bauteils B wird zuerst ein elastisches Element 3 über den Schaftbereich bzw. Zwischenbereich 2d sowie den ersten Bereich 2a bis zum Begrenzungselement 2e geschoben. Anschließend wird das Befestigungselement 2 zuerst mit seinem ersten Bereich 2a durch eine Öffnung eines Bauteils B durchgeschoben, wonach ein weiteres elastisches Element 3 über den Zwischenbereich 2d geschoben wird. Anschließend wird das Befestigungselement 2 mit seinem ersten Bereich 2a in die Öffnung der Stirnseite 1c des Grundkörpers 1 eingeschoben, wobei die Vorsprünge 2b aufgrund ihrer schrägen Anlagenflächen nach innen gebogen werden bzw. der erste Bereich 2a gegebenenfalls unter Vorsehung eines Schlitzes in diesem Bereich zusammengedrückt wird. Die Vorsprünge 2b greifen in die Rücksprünge bzw. Nuten 1d des Grundkörpers 1 ein, wobei sie aufgrund Ihrer speziellen Form ein Herausziehen des Befestigungselements 2 nach erfolgter Montage sicher verhindern.

Die Fig. 1a zeigt eine Querschnittsdarstellung durch das in Fig. 1 montierte Befestigungselement 2. Die Fig. 1b zeigt ebenfalls eine Querschnittsdarstellung durch das ringförmige elastische Element 3 mit seiner zentrischen Durchgriffsöffnung 3a.

Die Fig. 2 zeigt eine alternative Ausführungsform in Seitendarstellung eines Befestigungselements 102. Das Begrenzungselement 102e hat - im Gegensatz zum Befestigungselement gemäß der Fig. 1 und 1a - abgerundete Ecken. Der erste Bereich 102a ist geschlitzt ausgeführt, so dass die beiden den ersten Bereich 102a bildenden Abschnitte des mit Vorsprüngen 102b, Zwischenräumen 102c und einem Hohlraum 102f ausgestatteten Befestigungselements 102 nach innen verbogen werden können, so dass die Vorsprünge eventuell etwas härter ausgebildet werden können, und somit ein noch besseres Rastverhalten des Befestigungselements 102 erzielt wird. Der Zwischenbereich 102d, welcher an das Begrenzungselement 102e angrenzt, dient ebenfalls zum Durchgriff durch mindestens ein elastisches Mittel, wie es zum Beispiel in Fig. 1b dargestellt ist, sowie durch ein Kfz-Bauteil. Die Länge des Zwischenbereichs 102d ist an die Dicke des zu durchgreifenden Kfz-Bauteils sowie des elastischen Elements 103 anzupassen.

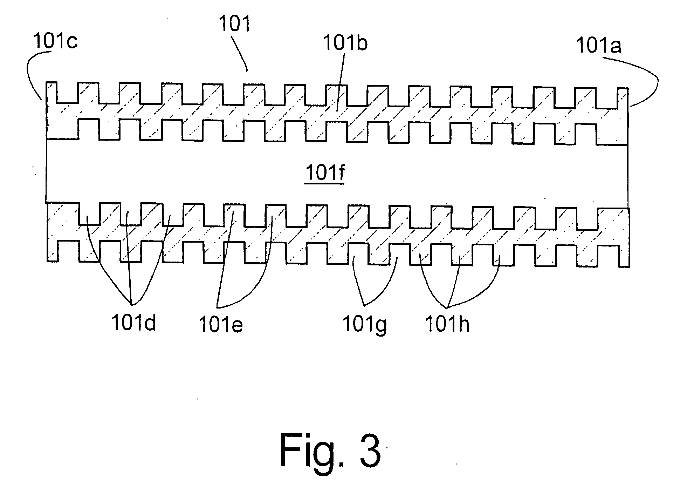

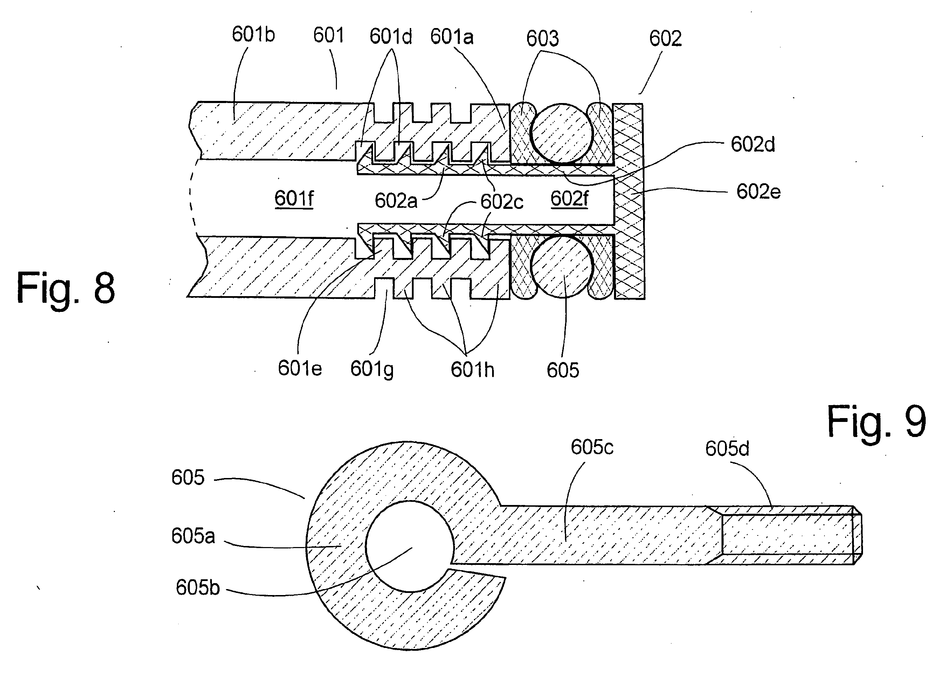

Die Fig. 3 zeigt eine alternative Ausführungsform eines Grundkörpers 101, der als mit einem Hohlraum 101f versehenes, doppelt gewelltes Strangpressprofil gefertigt ist. Der Grundkörper 101 weist an seiner Außen- sowie Innenmantelfläche umlaufende Rücksprünge 101d, 101g auf, die durch Vorsprünge 101e, 101h gebildet sind und sich von der Stirnseite 101a über den Mittelbereich 101b bis zur anderen Stirnseite 101c erstrecken. Es ist selbstverständlich möglich, dass, wie in Fig. 8 dargestellt, die umlaufenden Rücksprünge bzw. Nuten sich nicht über die gesamte Länge des Grundkörpers erstrecken, sondern nur in den Bereichen bzw. Endbereichen, welche mit den Befestigungselementen zusammenwirken.

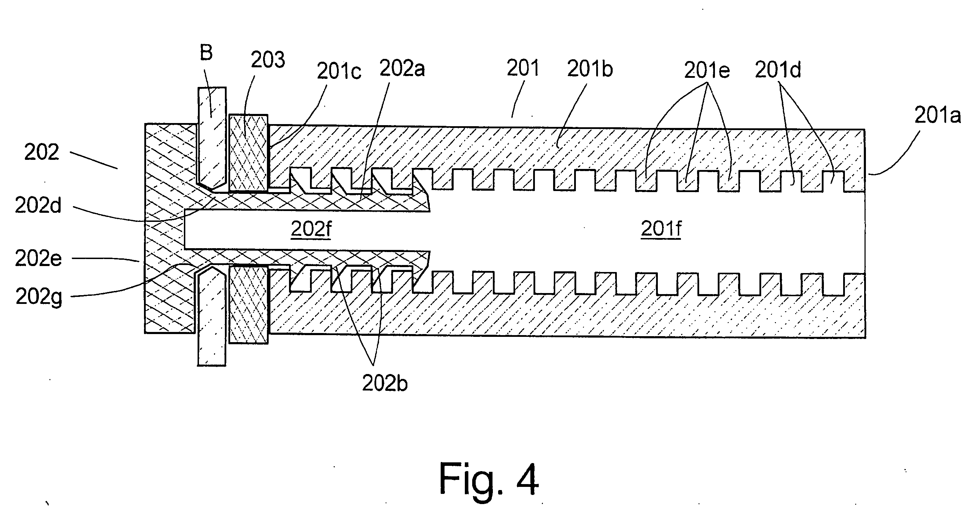

Die Fig. 4 zeigt eine weitere mögliche Ausgestaltung einer erfindungsgemäßen Pendelstütze, bei der lediglich beispielhaft an einer Seite ein Kfz-Bauteil B mittels eines Befestigungselements 202 sowie eines elastischen Elements 203 befestigt ist. Das Befestigungselement 202 ist aus einem etwas weicherem Material und lässt sich somit leicht verbiegen, so dass sich eine elastische Verbindung zwischen Bauteil B und Grundkörper 201 ergibt, wobei der Grundkörper 201 einen mittleren Bereich 201b, eine erste Stirnseite 201a sowie eine zweite Stirnseite 201c und umlaufende Rücksprünge 201d mit seitlichen Begrenzungen 201e dieser Rücksprünge sowie einen durchgehenden Hohlraum 201f aufweist. Das elastische Element 203 liegt zwischen der Stirnseite 201c und dem Bauteil B, damit diese sich relativ zueinander bewegen können. Es ist selbstverständlich, dass die Steifigkeit des Befestigungselements in Abhängigkeit der benötigten Relativbewegungen zwischen Bauteil B und Grundkörper 201 entsprechend gewählt werden muss. Es ist ebenfalls möglich, dass der erste Bereich 202a mit seinen Vorsprüngen 202b aus einem festeren, z.B. faserverstärkten Kunststoff hergestellt ist, so dass dieser Bereich eine größere Biegesteifigkeit und Festigkeit aufweist als die übrigen Bereiche 202d und 202e. Hierdurch wird sichergestellt, dass eine dauerhafte Verrastung zwischen dem Grundkörper 201 und dem Befestigungselement 202 gegeben ist, wobei dennoch eine genügende große Relativbewegung zwischen dem Kfz-Bauteil B und dem Grundkörper 201 möglich ist. Der Übergang 202g zwischen Zwischenbereich 202d und Begrenzungselement 202e des Befestigungselements 202 ist entsprechend den Konturen des Bauteils B anzupassen bzw. zu wählen.

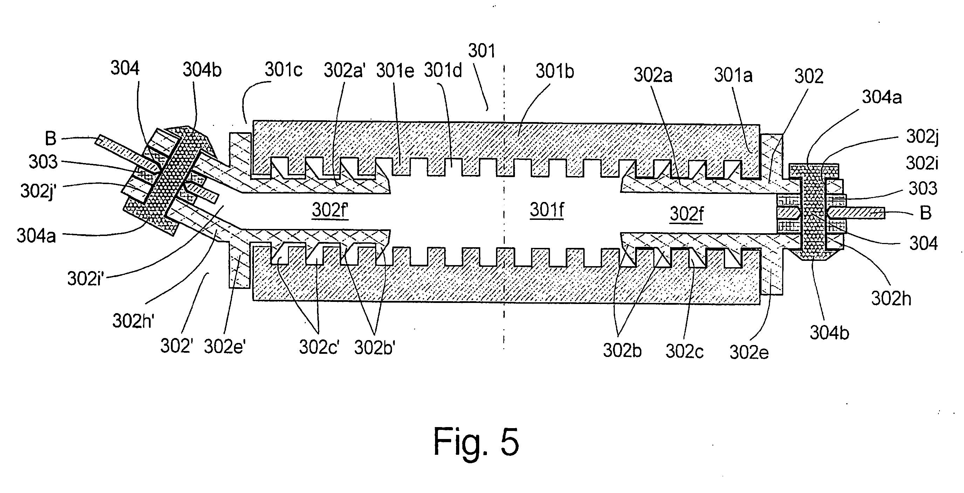

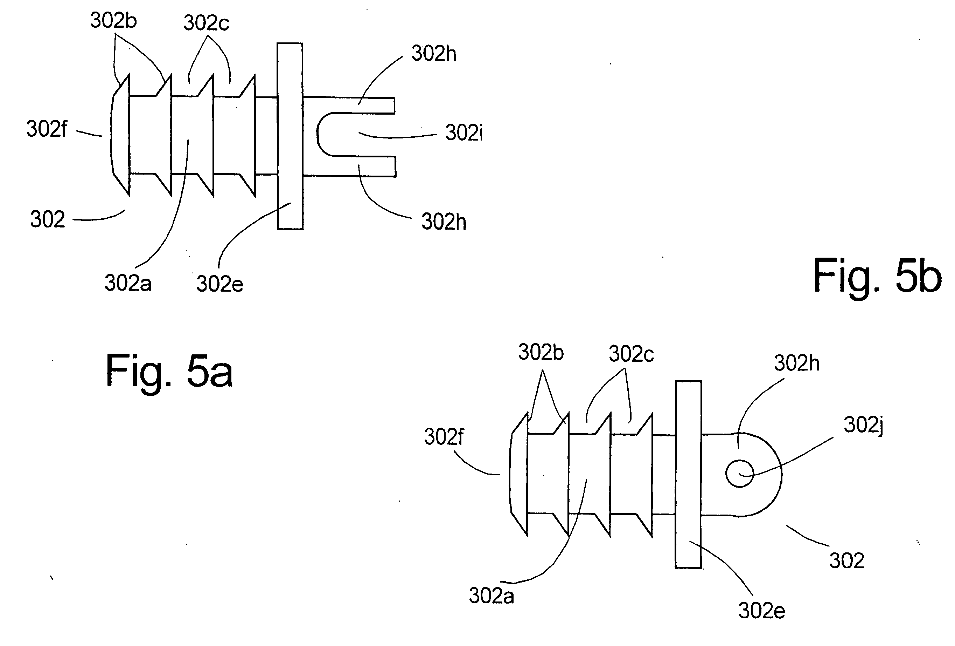

Die Fig. 5 zeigt eine weitere alternative Ausführungsform einer erfindungsgemäßen Pendelstütze, wobei zwei mögliche Arten von Befestigungselementen 302 und 302' jeweils in die Stirnseiten 301a bzw. 301c des Grundkörpers 301 verrastet sind. Die Befestigungselemente 302 und 302' sind derart ausgestaltet, dass sie mit ihrem Begrenzungselement 302e bzw. 302e' an der Stirnseite 301a bzw. 301c des Grundkörpers 301 anliegen. Das Kfz-Bauteil B ist jeweils an einem an dem Begrenzungselement 302e bzw. 302e' angeformten Befestigungsmittel 302h bzw. 302h' mittels eines Sicherungsmittels 304 in Form eines Stifts und einem elastischen Element 303 befestigt. Das Bauteil B liegt zwischen den als Wänden ausgebildeten zwei Befestigungsmitteln 302h bzw. 302h' ein, wobei die elastischen Elemente 303 sicherstellen, dass eine Relativbewegung zwischen dem Befestigungselement 302, 302' und dem Bauteil B möglich ist.

Die Fig. 5a zeigt eine seitliche Darstellung bzw. die Fig. 5b eine Ansicht 90° gedreht auf ein Befestigungselement 302, wie es rechts in Fig. 5 dargestellt ist. Die Befestigungsmittel 302h sind als zwei parallel und zueinander beabstandete angeordnete Wände, welche am Begrenzungselement 302e angeformt sind. In dem von den Wänden 302h gebildeten Zwischenraum 302i kann das Bauteil B, eingefasst von einem elastischen Mittel 303, angeordnet werden. Die Wände 302h weisen, wie in Fig. 5b dargestellt; fensterartige runde Öffnungen 302j auf, durch das ein Sicherungsmittel 304 durchgreift. Das Sicherungsmittel 304 durchgreift zudem entsprechende Öffnungen des elastischen Elements 303 sowie des Bauteils B. Das Sicherungsmittel 304 weist einen Kopf 304a sowie eine Rastspitze 304b, welche mittels eines Schafts miteinander verbunden sind, auf. Die Rastspitze 304b weist einen umlaufenden Kragen auf, dessen äußerer Durchmesser größer als der Durchmesser der kreisförmigen Öffnung 302j ist, so dass nach dem Durchstecken des Sicherungsmittels dieses unverlierbar mit dem Befestigungselement 302 verbunden ist.

Es ist selbstverständlich möglich, dass das Kfz-Bauteil andersartig geformt ist, so dass z. B. das Kfz-Bauteil die Befestigungsmittel 302h umgreift. Es ist ebenfalls möglich, dass die Befestigungsmittel 302h oder das gesamte Befestigungselement 302 aus einem derart weichen Material gefertigt sind, dass ein elastisches Element 303, welches zwischen das Bauteil B und dem Befestigungselement angeordnet ist, entfallen kann.

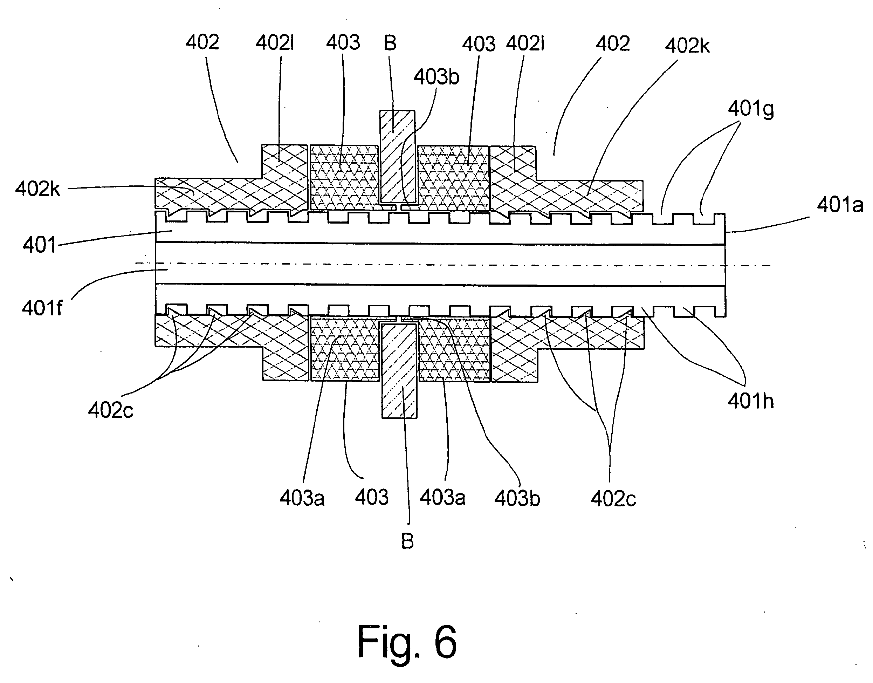

Die Fig. 6 zeigt eine Alternative zur Befestigung eines Kfz-Bauteils B an einem Grundkörper 401, wobei das Bauteil B den Grundkörper 401 umgreift und zwischen zwei elastischen Elementen 403 einliegt, welche wiederum von außen mittels zweier außen auf den Grundkörper aufgeschobenen Befestigungselemente 402 zusammengedrückt werden. Die elastischen Elemente 403 weisen Vorsprünge 403b auf, die an dem Grundkörper 403a angeformt sind, welche zwischen dem Bauteil B und der äußeren Mantelfläche des Grundkörpers 401 einliegen, so dass das Bauteil B nicht in direktem Kontakt mit dem Grundkörper 401 gelangt. Die Befestigungselemente 402 weisen einen hülsenförmigen Körper 402k auf, an dem ein nach außen ragender Kragen 4021 angeformt ist. Der hülsenförmige Körper 402k weist an seiner Innenmantelfläche umlaufende oder vereinzelte Vorsprünge 402c auf, die in entsprechenden Abständen wie die Rücksprünge bzw. Nuten 401g zueinander beabstandet sind und in diese verrastend eingreifen. Die sägezahnförmigen Vorsprünge 402c der beiden Befestigungselemente 402 sind derart angeordnet, dass die einmal aufgeschobenen Befestigungselemente 402 nicht mehr voneinander wegbewegt werden können und somit sicher das Bauteil B und die elastischen Elemente 403 zusammendrücken. Es ist selbstverständlich möglich, dass das Kfz-Bauteil B den Grundkörper 401 vollständig oder nur teilweise umfasst.

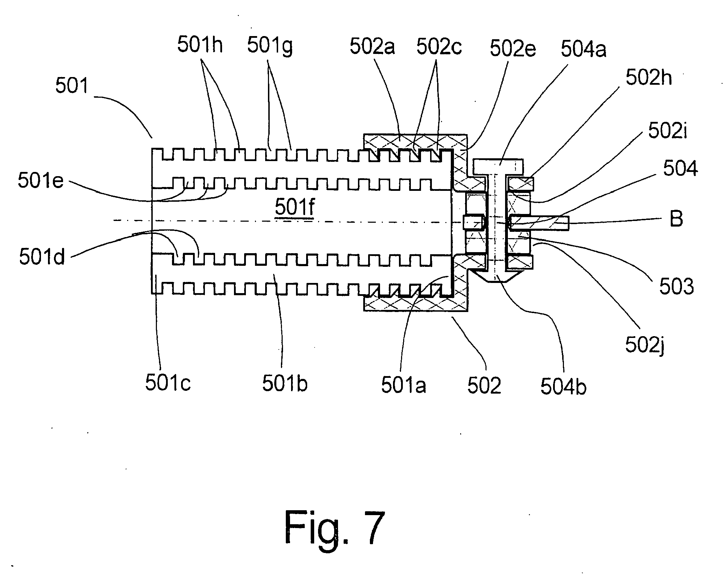

Die Fig. 7 zeigt eine weitere alternative Ausführungsform einer erfindungsgemäßen Pendelstütze, wobei lediglich eine Stirnseite eines Grundkörpers 501 mit daran befestigtem Bauteil B dargestellt ist. Der Grundkörper 501 weist außen und innen umlaufende Rücksprünge bzw. Nuten 501e und 501g auf. Bei Bedarf kann unter anderem aus Stabilitätsgründen auch auf die innenliegenden umlaufenden Rücksprünge bzw. Nuten 501e verzichtet werden, da lediglich die äußeren Rücksprünge bzw. Nuten 501g zur Verrastung mit dem Befestigungselement 502 Verwendung finden. Das Befestigungselement 502 weist einen ersten Bereich 502a auf, der die Form einer Hülse hat, an deren Innenwandung umlaufende Vorsprünge 502c angeordnet sind. Die Vorsprünge 502c sind in entsprechenden Abständen der Nuten 501g zueinander angeordnet. Die Höhe der Vorsprünge entspricht in etwa der Tiefe der Rücksprünge bzw. Nuten 501g. An den ersten Bereich 502a grenzt ein Bereich 502e an, der als Begrenzung dient, so dass das einmal aufgeschobene Befestigungselement auf dem Grundkörper, wenn überhaupt, nur eine sehr geringe Relativbewegung zum Grundkörper ausführen kann. An den Bereich 502e grenzen Befestigungsmittel 502h an, wobei die Befestigung des Bauteils B an den Befestigungsmitteln 502h funktionell der des Ausführungsbeispiels gemäß der Fig. 5, 5a und 5b entspricht.

Die Fig. 8 zeigt eine weitere alternative Ausführungsform einer erfindungsgemäßen Pendelstütze mit daran befestigtem Kfz-Bauteil, wobei das Kfz-Bauteil, wie in Fig. 9 dargestellt, als Schraube mit ringförmigem Kopf ausgebildet ist, und der Ringkopf 605a eine Öse 605b bildet, welche von dem Befestigungselement 602 mit seinem ersten Bereich 602a und dem Zwischenbereich 602d im montierten Zustand durchgriffen wird. Zwischen der Stirnseite 601a und dem Ringkopf 605a liegt ein entsprechend geformtes elastisches Element 603 ein. Ebenso liegt zwischen dem Ringkopf 605a und dem Kopf bzw. Begrenzungselement 602e des Befestigungselements 602 ein weiteres elastisches Element 603 ein. Durch die elastischen Elemente 603 kann die Schraube 605 eine Relativbewegung zu dem Befestigungselement 602 und dem Grundkörper 601 ausführen.

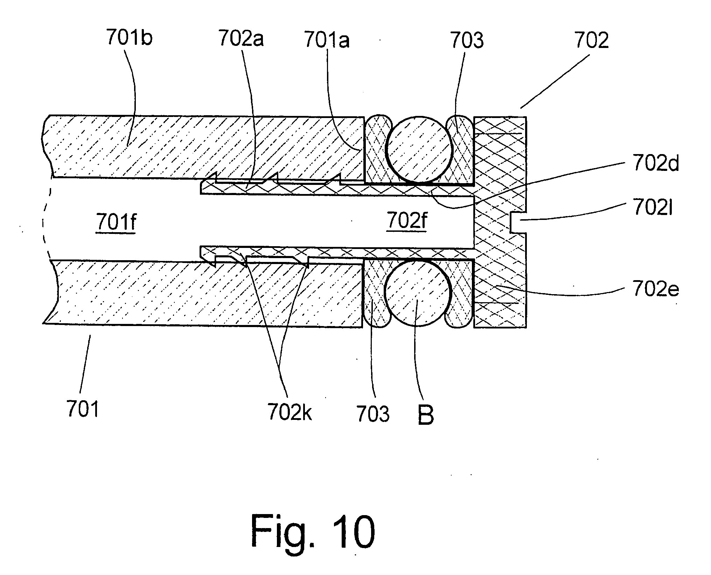

Die Fig. 10 zeigt eine weitere mögliche Ausführungsform einer erfindungsgemäßen Pendelstütze mit Befestigung eines Bauteils B, welches als Schraube gemäß der Fig. 9 ausgebildet ist. Es ist selbstverständlich möglich; die erfindungsgemäße Pendelstütze gemäß der Fig. 10 mit jedem beliebigen Kfz-Bauteil zu verbinden. Wesentlich an der Ausführungsform gemäß der Fig. 10 ist, dass das Befestigungselement 702 mit dem Grundkörper 701 nicht verrastet ist, sondern dass das Befestigungselement 702 ein selbstschneidendes Gewinde 702k aufweist, mit dem es in die hohle Stirnseite 701a einschraubbar ist, wobei sich das selbstschneidende Gewinde 702k in die Innenwandung des Hohlraums 701 einschneidet. Das Bauteil B wird zwischen zwei elastischen Elementen 703 von der Stirnseite 701a des Grundkörpers 701 und dem Begrenzungselements bzw. Schraubenkopf 702e des Befestigungselements 702 sicher gehalten.

Es versteht sich von selbst, dass die Verrastung der vorbeschriebenen möglichen Ausführungen sowie die Verbindung mittels selbstschneidendem Gewinde zwischen Befestigungselement und Grundkörper zusätzlich durch weitere Maßnahmen gesichert werden kann. So ist es unter anderem möglich, die beiden Bauteile zusätzlich miteinander zu verkleben, so dass eine unverlierbare Verbindung zwischen Grundkörper und Befestigungselement entsteht. Ebenfalls ist es möglich auf Verrastungen zu verzichten und das Befestigungselement lediglich mit dem Grundkörper zu verkleben oder beispielsweise mittels Ultraschall zu verbinden.

Das Befestigungselement kann prinzipiell beliebig ausgestaltet werden. So ist es möglich, einen Winkelversatz zwischen Grundkörper und Kfz-Bauteil bereits durch das Befestigungselement selbst sicherzustellen, wie es zum Bespiel in Fig. 5, linke Seite, dargestellt ist, wo die Befestigungsmittel 302h' in einem Winkel zum ersten Bereich 302a' angeordnet sind. Auch ist die Anbindung zwischen Bauteil und Befestigungselement beliebig wählbar. Es ist lediglich zu gewährleisten, dass eine schnelle und einfache Verbindung z. B. mit der dargestellten Verbindung, sichergestellt ist. Die Art und Weise, wie die Verrastung zwischen Grundkörper und Befestigungselement ausgestaltet wird, ist ebenfalls dem Fachmann überlassen, welcher diese entsprechend den jeweiligen Forderungen vornehmen wird. Die beispielhaft mit den Figuren dargestellten Verrastungen sind nicht abschließend zu betrachten, vielmehr sind andere Ausformungen der Vorsprünge bzw. der Nuten möglich.

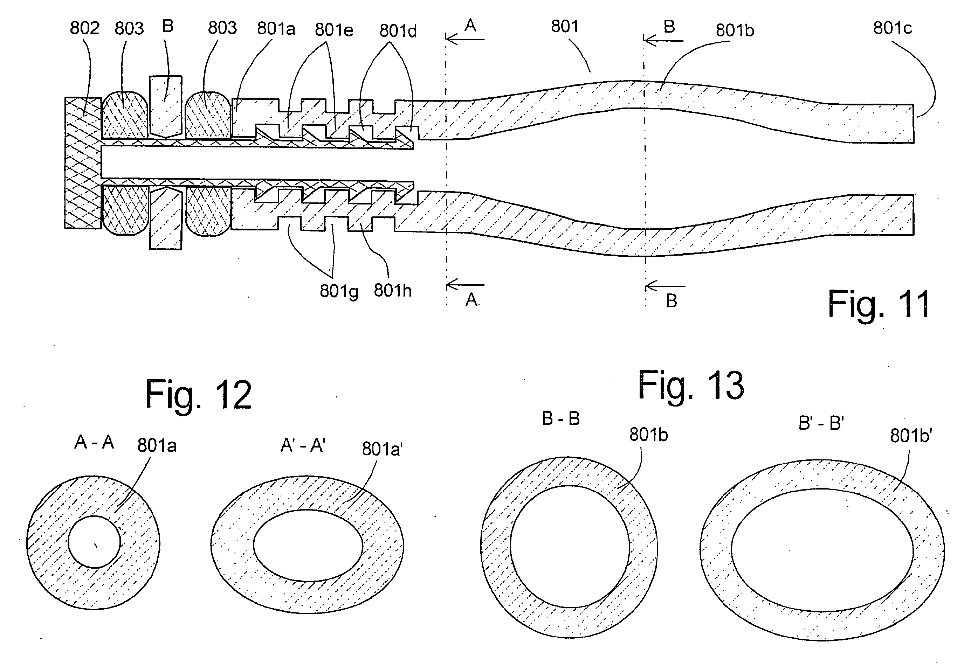

Die Figuren 11 bis 13 zeigen eine weitere alternative Ausführungsform eines Grundkörpers 801, an dem beispielhaft an seiner linken Seite 801a ein Kfz-Bauteil B mittels eines Befestigungselemente 802 und zweier elastischer Elemente 803 befestigt ist. Der Grundkörper 801 weist in seinem Mittelbereich 801b einen größeren Durchmesser auf als an seinen Stirnseitenbereichen 801 a und 801c. Der Grundkörper kann z.B. zuerst als extrudierter Vorformling hergestellt werden, der nachträglich mittels des Hohlkörperblasverfahrens insbesondere in seinem Mittelbereich 801b aufgeweitet wird. Hierdurch ergibt sich eine höhere Steifigkeit des Grundkörpers. Durch die gewählten Herstellungsverfahren Strangpressen und/oder Hohlkörperblasen ist es möglich, die Querschnittsform des Grundkörpers beliebig auszugestalten. So ist z.B. ein kreisförmiger oder ovaler bzw. elliptischer Querschnitt, wie er in den Figuren 12 und 13 dargestellt ist, denkbar.

### Bezugszeichenliste

| B | | Bauteil |
|---|---|---|
| | | |
| 1, 101, 201, 301, | | |
| 401,501,601,701, 801 | | |

| | | Grundkörper |
|---|---|---|
| | a | erstes Stirnende des Grundkörpers |
| | b | mittlerer Bereich des Grundkörpers |
| | c | zweites Stirnende des Grundkörpers |
| | d | umlaufende Rücksprünge bzw. Nuten an der Innenwandung |
| | | des Grundkörpers |
| | e | seitliche Begrenzungen der Rücksprünge bzw. Nuten des |
| | | Grundkörpers |
| | f | durchgehender Hohlraum des Grundkörpers |
| | g | umlaufende Rücksprünge bzw. Nuten an der Außenwandung |
| | | des Grundkörpers |
| | h | seitliche Begrenzungen der Rücksprünge bzw. Nuten des |
| | | Grundkörpers |
| | | |
| 2, 102, 202, 302, | | |
| 402,502,602,702, 802 | | |

| | | Befestigungselement |
|---|---|---|
| | a | erster die Vorsprünge aufweisender Bereich des |
| | | Befestigungselements |
| | b | Vorsprünge des Befestigungselements |
| | c | Zwischenraum zwischen den Vorsprüngen |
| | d | Zwischenbereich zwischen Kopfbereich und erstem |
| | | Bereich |
| | e | Begrenzungselement mit Kragen |
| | f | Hohlraum evtl. geschlitzt |
| | g | Seitenwandung des Begrenzungselements |
| | h | Befestigungsmittel in Form von Wänden |
| | i | Hohlraum zwischen den Wänden h |
| | j | fensterartige Öffnungen bzw. Bohrungen in den |
| | | Wänden h |
| | k | selbstschneidendes Gewinde |
| | l | Kragen |
| | | |
| 3, 103, 203, 303, 403, 503, 603, 803 | | |

| | | elastisches Element |
|---|---|---|
| | a | Ring (Durchgriffsöffnung) |
| | b | angeformter Kragen |
| | | |
| 304, 504 | | |

| | | Sicherungsmittel |
|---|---|---|
| | a | Kopf |
| | b | Rastspitze |
| 605 | | |

| | | Schraube mit Ring als Teil des Befestigungselements |
|---|---|---|
| | a | Ringkopf |
| | b | Öse |
| | c | Schaft |
| | d | Gewinde |

## Patentansprüche

1. Pendelstütze für ein Kraftfahrzeug, mit einem länglichen als ein hohles Strangpressprofilteil ausgebildeten Grundkörper (1, 101, 201, 301, 401, 501, 601, 701), der über mindestens ein Befestigungselement (2, 102, 202, 302, 402, 502, 602, 702) mit Kfz-Bauteilen (B) verbindbar ist,
**dadurch gekennzeichnet, dass**
der Grundkörper (1, 101, 201, 301, 401, 501, 601) mehrere in gleichmäßigen Abständen zueinander beabstandete Hinterschneidungen bzw. Rücksprünge (1d; 101e, 101g; 201d; 301d; 401g; 501d, 501g; 601d, 601g) hat, die insbesondere parallel zueinander angeordnet sind und dass ein Befestigungselement (2, 102, 202, 302, 402, 602) mit seinem einen ersten Bereich (2a, 102a, 202a, 302a, 402a, 602a) in einem freien Ende (1a, 1c; 101a, 101c; 201a, 201c; 301a, 301c; 401a, 401c; 601a, 601c) des Grundkörpers (1, 101, 201, 301, 401, 601) einliegt bzw. einschiebbar ist, wobei der erste Bereich (2a, 102a, 202a, 302a, 402a, 602a) außen mindestens einen insbesondere umlaufenden Vorsprung und/oder eine Verzahnung (2b, 102b, 202b, 302b, 402b, 602b) hat, die in die Hinterschneidungen, Rücksprünge bzw. die Verzahnung (1d, 101d, 201d, 301d, 401d, 601d) des Grundkörpers (1, 101, 201, 301, 401, 601) eingreifen bzw. mit diesen zusammenwirken.

2. Pendelstütze nach Anspruch 1, **dadurch gekennzeichnet, dass** der Grundkörper (1, 101, 201, 301, 401, 501, 601, 701) zumindest im Bereich eines seiner freien Enden (1a, 1c; 101a, 101c; 201a, 201c; 301a, 301c; 401a, 401c; 501a, 501c; 601a, 601c; 701a) an seiner Innenwandung und/oder Außenwandung mindestens eine Hinterschneidung, einen Rücksprung und/oder eine Verzahnung (1d; 101e, 101g; 201d; 301d; 401g; 501d,501g; 601d, 601g) hat.

3. Pendelstütze nach einem der vorhergehenden Ansprüche, **dadurch gekennzeichnet, dass** der Grundkörper (1, 101, 201, 301, 401, 501) über seine ganze Länge außen und/oder innen angeordnete Hinterschneidungen oder Rücksprünge (1d; 101e, 101g; 201d; 301d; 401g; 501d, 501g) hat.

4. Pendelstütze nach einem der Ansprüche 2 bis 4, **dadurch gekennzeichnet, dass** die Hinterschneidung oder der Rücksprung (1d; 101e, 101g; 201d; 301d; 401g; 501d, 501g; 601d, 601g) eine insbesondere umlaufende Nut bzw. Rastnut oder Rille ist.

5. Pendelstütze nach einem der Ansprüche 1 bis 5, **dadurch gekennzeichnet, dass** ein Befestigungselement (502) mit seinem einen ersten Bereich (502a) ein freies Ende (501a) des Grundkörpers (501) umfasst bzw. auf dieses aufschiebbar ist, wobei der erste Bereich (502a) nach innen weisende insbesondere umlaufende Vorsprünge und/oder Zähne (502c) hat, die in die Hinterschneidungen, Rücksprünge bzw. die Verzahnung (501d) des Grundkörpers (501) eingreifen bzw. mit diesen zusammenwirken.

6. Pendelstütze nach einem der vorhergehenden Ansprüche, **dadurch gekennzeichnet, dass** ein Befestigungselement mit seinem einen ersten Bereich ein freies Ende des Grundkörpers umfasst bzw. auf dieses aufschiebbar ist oder in das Hohlprofil des Grundkörpers eingreift bzw. einschiebbar ist, wobei zumindest der erste Bereich mit der Außen- bzw. Innenwandung des Grundkörpers verklebt oder verschweißt ist.

7. Pendelstütze nach einem der vorhergehenden Ansprüche, **dadurch gekennzeichnet, dass** das Kfz-Bauteil (B) elastisch am Befestigungselement oder zwischen Befestigungselement und Grundkörper gelagert ist.

8. Pendelstütze nach einem der vorhergehenden Ansprüche, **dadurch gekennzeichnet, dass** das Befestigungselement (2, 102, 202, 302, 402, 502, 602, 702) die Stirnseite (1a,1c; 101a, 101c; 201a, 201c; 301a, 301c; 401a, 401c; 601a,601c; 701a) des Grundkörpers (1, 101, 201, 301, 401, 501, 601, 701) abdichtend verschließt und insbesondere als Stopfen ausgebildet ist.

9. Pendelstütze nach einem der vorhergehenden Ansprüche, **dadurch gekennzeichnet, dass** an den ersten Bereich (2a, 102a, 202a, 302a, 402a, 602a, 702a) unmittelbar oder über einen zweiten Bereich (2d, 102d, 202d, 602d, 702d) ein Begrenzungselement (2e, 102e, 202e, 602e, 702e), insbesondere in Form eines Kragens, angrenzt oder angeformt ist.

10. Pendelstütze nach Anspruch 9, **dadurch gekennzeichnet, dass** zwischen dem Begrenzungselement und der Stirnseite des Grundkörpers ein Dichtungselement angeordnet ist, welches den zweiten Bereich insbesondere vollständig umfasst.

11. Pendelstütze nach Anspruch 10, **dadurch gekennzeichnet, dass** das Befestigungselement (2, 102, 202, 602, 702) mit seinem ersten und zweiten Bereich eine fensterartige Öffnung eines mit der Pendelstütze zu verbindenden Kfz-Bauteils durchgreift, wobei insbesondere die fensterartige Öffnung des Kfz-Bauteils den zweiten Bereich (2d, 102d, 202d, 602d, 702d) umfasst.

12. Pendelstütze nach Anspruch 11, **dadurch gekennzeichnet, dass** zwischen dem Begrenzungselement (2e, 102e, 202e, 602e, 702e) und dem Kfz-Bauteil (B) und/oder zwischen dem Kfz-Bauteil und der Stirnseite des Grundkörpers mindestens ein zusätzliches elastisches Element (3, 203, 603, 703) angeordnet ist.

13. Pendelstütze nach einem der vorhergehenden Ansprüche, **dadurch gekennzeichnet, dass** das Befestigungselement (302, 502) an der dem ersten Bereich (302a, 502a) abgewandten Seite des Begrenzungselements (302e, 502e) Befestigungsmittel (302h, 502h) zur Befestigung an einem Kfz-Bauteil (B) aufweist.

14. Pendelstütze nach einem der vorhergehenden Ansprüche, **dadurch gekennzeichnet, dass** an dem ersten Bereich ein Befestigungsmittel zur Befestigung des Befestigungselements an einem Kfz-Bauteil direkt oder über ein Zwischenelement bzw. -bereich angeordnet, insbesondere angeformt ist.

15. Pendelstütze nach Anspruch 13 oder 14, **dadurch gekennzeichnet, dass** das Befestigungselement (302, 502) zwei insbesondere parallel zueinander angeordnete Abschnitte bzw. Wandelemente (302h, 502h) hat, zwischen denen ein zwischen elastischen Mitteln (303, 503) einliegendes Kfz-Bauteil (B) anordbar ist, wobei ein Sichenangselement (304, 504), insbesondere ein Stift oder Bolzen, das Bauteil nebst den elastischen Mitteln mit den Abschnitten bzw. Wandelementen (302h, 502h) verbindet.

16. Pendelstütze nach Anspruch 4, **dadurch gekennzeichnet, dass** zwei hülsenförmige Befestigungselemente (402) den Grundkörper (401) umfassen und mit ihren nach innen weisenden insbesondere umlaufenden Vorsprüngen bzw. Verzahnungen (402c) in die Rillen bzw. Nuten (401g) des Grundkörpers (401) eingreifen, wobei mindestens ein elastisches Element (403) zwischen den Befestigungselementen (402) angeordnet ist, und dass ein Kfz-Bauteil (B) zwischen den Befestigungselementen (402) angeordnet bzw. befestigt ist.

17. Pendelstütze nach einem der Ansprüche 1 bis 3, **dadurch gekennzeichnet, dass** das Befestigungselement (702) mittels einer Schraubverbindung (702k) in eine Stirnseite (701 a) des Grundkörpers (701), insbesondere mit einem selbstschneidendem Gewinde, eingeschraubt bzw. einschraubbar ist.

18. Pendelstütze nach einem der vorhergehenden Ansprüche, **dadurch gekennzeichnet, dass** der Grundkörper (1, 101, 201, 301, 401, 501, 601, 701) aus einem insbesondere faserverstärktem Kunststoff hergestellt ist.

19. Pendelstütze nach einem der vorhergehenden Ansprüche, **dadurch gekennzeichnet, dass** der Grundkörper (1, 101, 201, 301, 401, 501, 601, 701) einen kreisförmigen, elliptischen oder ovalen Querschnitt hat.

20. Pendelstütze nach einem der vorhergehenden Ansprüche, **dadurch gekennzeichnet, dass** der Durchmesser des Mittelbereichs (801b) des Grundkörpers (801) größer ist als der Durchmesser der Stirnseitenbereiche (801a, 801c).

21. Pendelstütze nach einem der vorhergehenden Ansprüche, **dadurch gekennzeichnet, dass** der Grundkörper und das Befestigungselement eine Schnapp- oder Rastverbindung miteinander bilden.

22. Verfahren zur Herstellung einer Pendelstütze nach einem der vorhergehenden Ansprüche, **dadurch gekennzeichnet, dass** in einem ersten Herstellungsschritt ein extrudierter Vorformling hergestellt wird, der in nachfolgenden Herstellungsschritten mittels des Hohlkörperblasverfahrens ausgeformt wird.

## Claims

1. Pendulum link for a motor vehicle, with an elongate base body (1, 101, 201, 301, 401, 501, 601, 701) in the form of a hollow extrusion moulded section part, which can be connected to vehicle components (B) by means of at least one fixing element (2, 102, 202, 302, 402, 502, 602, 702),
**characterised in that**
the base body (1, 101, 201, 301, 401, 501, 601) has several undercuts or indentations (1d; 101e, 101g; 201d; 301d; 401g; 501d, 501g; 601d, 601g) spaced at equal distances apart from one another, which are disposed parallel with one another in particular, and a fixing element (2, 102, 202, 302, 402, 602) lies inside or can be pushed into a free end (1a, 1c; 101a, 101c; 201a, 201c; 301a, 301c; 401a, 401c; 601a, 601c) of the base body (1, 101, 201, 301, 401, 601) by means of its one first region (2a, 102a, 202a, 302a, 402a, 602a), which first region (2a, 102a, 202a, 302a, 402a, 602a) has at least one, in particular circumferentially extending, projection and/or teeth (2b, 102b, 202b, 302b, 402b, 602b) on the outside which engage in the undercuts, indentations or toothing (1d, 101d, 201d, 301d, 401d, 601d) of the base body (1, 101, 201, 301, 401, 601) and co-operate therewith.

2. Pendulum link as claimed in claim 1, **characterised in that** the base body (1, 101, 201, 301, 401, 501, 601, 701) has at least one undercut, an indentation and/or teeth (1d; 101e, 101g; 201d; 301d; 401g; 501d, 501g; 601d, 601g) at least in the region of one of its free ends (1a, 1c; 101a, 101c; 201a, 201c; 301a, 301c; 401a, 401c; 501a, 501c; 601a, 601c; 701a) on its internal wall and/or external wall.

3. Pendulum link as claimed in one of the preceding claims, **characterised in that** the base body (1, 101, 201, 301, 401, 501) has undercuts or indentations (1d; 101e, 101g; 201d; 301d; 401g; 501d, 501g) disposed across its entire length externally and/or internally.

4. Pendulum support as claimed in one of claims 2 to 4, **characterised in that** the undercut or indentation (1d; 101e, 101g; 201d, 301d; 401g; 501d, 501g; 601d, 601g) is a circumferentially extending groove or catch groove or channel in particular.

5. Pendulum link as claimed in one of claims 1 to 5, **characterised in that** a fixing element (502) fits round a free end (501a) of the base body (501) or can be pushed onto it by means of its first region (502a), and the first region (502a) has inwardly pointing, in particular circumferentially extending projections and/or teeth (502c) which locate in the undercuts, indentations or teeth (501d) of the base body (501) and co-operate therewith.

6. Pendulum link as claimed in one of the preceding claims, **characterised in that** a fixing element fits round a free end of the base body or can be pushed onto it or fits in respectively can be pushed into the hollow section of the base body by means of its first region, and at least the first region is bonded or welded to the external or internal wall of the base body.

7. Pendulum link as claimed in one of the preceding claims, **characterised in that** the vehicle component (B) is elastically mounted on the fixing element or between the fixing element and base body.

8. Pendulum link as claimed in one of the preceding claims, **characterised in that** the fixing element (2, 102, 202, 302, 402, 502, 602, 702) closes the terminal end (1a, 1c; 101a, 101c; 201a, 201c; 301a, 301c; 401a, 401c; 601a, 601c; 701a) of the base body (1, 101, 201, 301, 401, 501, 601, 701) in a sealed arrangement and in particular is designed as a stopper.

9. Pendulum link as claimed in one of the preceding claims, **characterised in that** a restrictor element (2e, 102e, 202e, 602e, 702e), in particular in the form of a collar, adjoins or is integrally formed on the first region (2a, 102a, 202a, 302a, 402a, 602a, 702a) directly or via a second region (2d, 102d, 202d, 602d, 702d).

10. Pendulum link as claimed in claim 9, **characterised in that** a sealing element is disposed between the restrictor element and the terminal end of the base body, which fits around the second region, in particular completely.

11. Pendulum link as claimed in claim 10, **characterised in that** the fixing element (2, 102, 202, 602, 702) extends through a window-type orifice of a vehicle component to be connected to the pendulum link by means of its first and second region, and the window-type orifice of the vehicle component fits round the second region (2d, 102d, 202d, 602d, 702d) in particular.

12. Pendulum link as claimed in claim 11, **characterised in that** at least one additional elastic element (3, 203, 603, 703) is disposed between the restrictor element (2e, 102e, 202e, 602e, 702e) and the vehicle component (B) and/or between the vehicle component and the terminal end of the base body.

13. Pendulum link as claimed in one of the preceding claims, **characterised in that** the fixing element (302, 502) has fixing means (302h, 502h) on the side of the restrictor element (302e, 502e) remote from the first region (302a, 502a) for providing an attachment to a vehicle component (B).

14. Pendulum link as claimed in one of the preceding claims, **characterised in that** a fixing means is disposed, in particular is integrally formed, on the first region for attaching the fixing element to a vehicle component directly or via an intermediate element or region.

15. Pendulum link as claimed in claim 13 or 14, **characterised in that** the fixing element (302, 502) has two portions or wall elements (302h, 502h), in particular disposed parallel with one another, between which a vehicle component (B) inserted between elastic means (303, 503) can be disposed, and a locking element (304, 305), in particular a pin or bolt, connects the component together with the elastic means to the portions or wall elements (302h, 502h).

16. Pendulum link as claimed in claim 4, **characterised in that** two sleeve-shaped fixing elements (402) fit round the base body (401) and engage with their inwardly pointing, in particular circumferentially extending projections or teeth (402c) in the channels or grooves (401g) of the base body (401), and at least one elastic element (403) is disposed between the fixing elements (402), and a component (B) is disposed and secured between the fixing elements (402).

17. Pendulum link as claimed in one of claims 1 to 3, **characterised in that** the fixing element (702) is screwed into or can be screwed into a terminal end (701a) of the base body (701) by means of a screw connection (702k), in particular with a self-tapping thread.

18. Pendulum link as claimed in one of the preceding claims, **characterised in that** the base body (1, 101, 201, 301, 401, 501, 601, 701) is made from a plastic material which is fibre-reinforced in particular.

19. Pendulum link as claimed in one of the preceding claims, **characterised in that** the base body (1, 101, 201, 301, 401, 501, 601, 701) has a circular, elliptical or oval cross-section.

20. Pendulum link as claimed in one of the preceding claims, **characterised in that** the diameter of the middle region (801b) of the base body (801) is bigger than the diameter of the terminal end regions (801a, 801c).

21. Pendulum link as claimed in one of the preceding claims, **characterised in that** the base body and the fixing element form a snap-fit or catch connection with one another.

22. Method of producing a pendulum link as claimed in one of the preceding claims, **characterised in that** an extruded preform is produced in a first manufacturing step, which is shaped by means of a hollow-body blow moulding process during subsequent manufacturing steps.

## Revendications

1. Support oscillant pour un véhicule automobile, comprenant un corps de base allongé (1, 101, 201, 301, 401, 501, 601, 701) réalisé sous forme d'un élément profilé extrudé creux, qui peut être relié à des composants (B) du véhicule par l'intermédiaire d'au moins un élément de fixation (2, 102, 202, 302, 402, 502, 602, 702),
**caractérisé en ce que**
le corps de base (1, 101, 201, 301, 401, 501, 601) comporte plusieurs contre-dépouilles ou retraits (1d; 101e, 101g; 201d; 301d; 401g; 501d, 501g; 601d, 601g) équidistant(e)s les un(e)s des autres, qui sont notamment disposé(e)s parallèlement les un(e)s aux autres, **en ce qu'**un élément de fixation (2, 102, 202, 302, 402, 602) est logé, ou peut être engagé, par une première section de celui-ci (2a, 102a, 202a, 302a, 402a, 602a), dans une extrémité libre (1a, 1c; 101a, 101c; 201a; 301a, 301c; 401a, 401c; 601a, 601c) du corps de base (1, 101, 201, 301, 401, 501, 601), la première section (2a, 102a, 202a, 302a, 402a, 602a) comportant à l'extérieur au moins une saillie, notamment périphérique, et/ou une denture (2b, 102b, 202b, 302b, 402b, 602b) qui s'engrène dans, ou coopère avec, les contre-dépouilles, retraits ou la denture (1d, 101d, 201d, 301d, 401d, 601d) du corps de base (1, 101, 201, 301, 401, 601).

2. Support oscillant selon la revendication 1, **caractérisé en ce que** le corps de base (1, 101,201, 301, 401, 501, 601, 701) comporte au moins une contre-dépouille, un retrait et/ou une denture (1d; 101e, 101g; 201d; 301d; 401g; 501d, 501g; 601d, 601g) aménagé(e) dans sa paroi intérieure et/ou sa paroi extérieure au moins au niveau de l'une de ses extrémités libres (1a, 1c; 101a, 101c; 201a, 201c; 301a, 301c; 401a, 401c; 501a, 501c; 601a, 601c; 701a).

3. Support oscillant selon l'une des revendications précédentes, **caractérisé en ce que** le corps de base (1, 101, 201, 301, 401, 501) comporte des contre-dépouilles ou retraits (1d; 101e, 101g; 201d; 301d; 401g; 501d, 501g) aménagé(e)s à l'extérieur et/ou à l'intérieur de celui-ci sur toute sa longueur.

4. Support oscillant selon l'une des revendications 2 à 4, **caractérisé en ce que** la contre-dépouille ou le retrait (1d; 101e, 101g; 201d; 301d; 401g; 501d, 501 g; 601d, 601g) est une rainure ou rainure d'arrêt ou une cannelure notamment périphérique.

5. Support oscillant selon l'une des revendications 1 à 4, **caractérisé en ce qu'**un élément de fixation (502) entoure, par sa première section (502a), une extrémité libre (501a) du corps de base (501), ou peut y être emmanché, la première section (502a) présentant des saillies et/ou dents (502c) notamment périphériques tournées vers l'intérieur, qui s'engagent dans les contre-dépouilles, retraits ou la denture (501 d) du corps de base (501) et coopèrent avec ceux-ci.

6. Support oscillant selon l'une des revendications précédentes, **caractérisé en ce qu'**un élément de fixation entoure, par sa première section, une extrémité libre du corps de base, ou peut y être emmanché, ou s'engage dans le profil creux du corps de base, ou peut y être emmanché, au moins ladite première section étant collée ou soudée sur la paroi extérieure ou intérieure du corps de base.

7. Support selon l'une des revendications précédentes, **caractérisé en ce que** le composant (B) du véhicule est monté de façon élastique sur l'élément de fixation ou entre l'élément de fixation et le corps de base.

8. Support oscillant selon l'une des revendications précédentes, **caractérisé en ce que** l'élément de fixation (2, 102, 202, 302, 402, 502, 602, 702) referme de façon étanche la face frontale (1a, 1c; 101a, 101c; 201a, 201c; 301a, 301c; 401a, 401c; 601a, 601c; 701a) du corps de base (1, 101, 201, 301, 401, 501, 601, 701), et est notamment réalisé sous forme d'un bouchon.

9. Support oscillant selon l'une des revendications précédentes, **caractérisé en ce qu'**un élément limiteur (2e, 102e, 202e, 602e, 702e) notamment réalisé sous forme d'une collerette est adjacent à, ou conformé sur, la première section (2a, 102a, 202a, 302a, 402a, 602a, 702a), soit de façon directement contiguë, soit par l'intermédiaire d'une deuxième section (2d, 102d, 202d, 602d, 702d).

10. Support oscillant selon la revendication 9, **caractérisé en ce qu'**un élément d'étanchéité est disposé entre l'élément limiteur et la face frontale du corps de base, et entoure notamment entièrement la deuxième section.

11. Support oscillant selon la revendication 10, **caractérisé en ce que** l'élément de fixation (2, 102, 202, 602, 702) traverse, par ses première et deuxième sections, une ouverture en forme de fenêtre d'un composant de véhicule à relier au support oscillant, l'ouverture en forme de fenêtre du composant du véhicule entourant notamment la deuxième section (2d, 102d, 202d, 602d, 702d).

12. Support oscillant selon la revendication 11, **caractérisé en ce qu'**au moins un élément élastique supplémentaire (3, 203, 603, 703) est disposé entre l'élément limiteur (2e, 102e, 202e, 602e, 702e) et le composant de véhicule (B) et/ou entre le composant de véhicule (B) et la face frontale du corps de base.

13. Support oscillant selon l'une des revendications précédentes, **caractérisé en ce que** l'élément de fixation (302, 502) comporte, du côté de l'élément limiteur (302e, 502e), qui est éloigné de la première section (302a, 502a), des moyens de fixation (302h, 502h) destinés à être fixés sur un composant de véhicule (B).

14. Support oscillant selon l'une des revendications précédentes, **caractérisé en ce qu'**un moyen de fixation est disposé, notamment conformé, sur la première section, permettant la fixation de l'élément de fixation sur un composant du véhicule, soit de façon directe, soit par l'intermédiaire d'un élément intermédiaire ou d'une section intermédiaire.

15. Support oscillant selon la revendication 13 ou 14, **caractérisé en ce que** l'élément de fixation (302, 502) comporte deux sections ou éléments de parois (302h, 502h) disposé(e)s notamment parallèlement l'un(e) à l'autre, entre lesquels/lesquelles un composant de véhicule (B) monté entre moyens élastiques (303, 503) peut être disposé, un élément de verrouillage (304, 504), notamment une goupille ou un axe, reliant le composant ainsi que les moyens élastiques aux sections ou éléments de paroi (302h, 502h).

16. Support oscillant selon la revendication 4, **caractérisé en ce que** deux éléments de fixation (402) en forme de douilles entourent le corps de base (401) et s'engagent, par leurs saillies ou dentures (402c) notamment périphériques tournés vers l'intérieur, dans les cannelures ou rainures (401 g) du corps de base (401), au moins un élément élastique (403) étant disposé entre les éléments de fixation (402), et **en ce qu'**un composant de véhicule (B) est disposé, voire fixé, entre les éléments de fixation (402).

17. Support oscillant selon l'une des revendications 1 à 3, **caractérisé en ce que** l'élément de fixation (702) est vissé ou peut être vissé dans une face frontale (701a) du corps de base (701) par l'intermédiaire d'une liaison vissée (702k), présentant en particulier un filetage autotaraudeur.

18. Support oscillant selon l'une des revendications précédentes, **caractérisé en ce que** le corps de base (1, 101, 201, 301, 401, 501, 601, 701) est fabriqué en une matière plastique, notamment en une matière plastique armée de fibres.

19. Support oscillant selon l'une des revendications précédentes, **caractérisé en ce que** le corps de base (1, 101, 201, 301, 401, 501, 601, 701) présente une section transversale circulaire, elliptique ou ovale.

20. Support oscillant selon l'une des revendications précédentes, **caractérisé en ce que** le diamètre de la partie médiane (801b) du corps de base (801) est supérieur au diamètre des parties terminales (801a, 801c).

21. Support oscillant selon l'une des revendications précédentes, **caractérisé en ce que** le corps de base et l'élément de fixation forment conjointement un assemblage à enclenchement ou à crantage.

22. Procédé de fabrication d'un support oscillant selon l'une des revendications précédentes, **caractérisé en ce qu'**une préforme extrudée est produite dans une première étape de fabrication, pour être ensuite façonnée finie pendant les étapes de fabrication suivantes en mettant en oeuvre le procédé d'extrusion-soufflage de corps creux.
